**Europäisches Patentamt**

**European Patent Office**

**Office européen des brevets**

(11) Veröffentlichungsnummer: **0 253 974**
**B1**

(12) **EUROPÄISCHE PATENTSCHRIFT**

(45) Veröffentlichungstag der Patentschrift:
**15.11.89**

(21) Anmeldenummer: **87106912.6**

(22) Anmeldetag: **13.05.87**

(51) Int. Cl.⁴: **G01B 11/02, G01B 21/00**

(54) **Längen- oder Winkelmesseinrichtung.**

(30) Priorität: **25.06.86 DE 3621236**

(43) Veröffentlichungstag der Anmeldung:
**27.01.88 Patentblatt 88/4**

(45) Bekanntmachung des Hinweises auf die Patenterteilung:
**15.11.89 Patentblatt 89/46**

(84) Benannte Vertragsstaaten:
**AT CH DE ES FR GB IT LI NL SE**

(56) Entgegenhaltungen:
**DD-A- 224 399**
**DE-C- 2 510 219**
**DE-C- 3 409 298**

(73) Patentinhaber: **DR. JOHANNES HEIDENHAIN GMBH,**
**Fraunhofer Strasse 2-4 Postfach 1260,**
**D-8225 Traunreut(DE)**

(72) Erfinder: **Ernst, Alfons, Dipl.-Ing., Traunring 62,**
**D-8225 Traunreut(DE)**

## Beschreibung

Die Erfindung betrifft eine Längen- oder Winkelmeßeinrichtung gemäß dem Oberbegriff des Anspruches 1.

Derartige absolute oder inkrementale Positionsmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Aus der DE-OS 17 73 403 ist es bekannt, daß bei einer Längenmeßeinrichtung mit einem Teilungsträger, dessen Teilungsebene mit der Teilung außerhalb der neutralen Ebene des Teilungsträgers liegt, Verbiegungen des Teilungsträgers in seiner Gebrauchslage Meßfehler zur Folge haben.

Bei einer solchen Längenmeßeinrichtung besitzt der Teilungsträger für die Teilung beispielsweise einen rechteckigen Querschnitt, dessen eine Oberfläche die Teilungsebene mit der Teilung bildet. Da diese Teilungsebene mit der Teilung außerhalb der neutralen Ebene des Teilungsträgers liegt, bewirken Verbiegungen des Teilungsträgers in seiner Gebrauchslage Dehnungen oder Stauchungen der Teilungsebene mit der Teilung, so daß Meßfehler auftreten können. Die neutrale Ebene des Teilungsträgers ist die einzige Ebene, die bei Verbiegungen des Teilungsträgers keine Längenänderungen in Form von Dehnungen oder Stauchungen erfährt.

In der DE-PS 25 10 219 ist eine Längenmeßeinrichtung mit einem Teilungsträger beschrieben, dessen Teilungsebene mit der Teilung außerhalb der neutralen Ebene des Teilungsträgers liegt. Die Teilung wird von einer Abtasteinheit abgetastet, die an einem zu messenden Objekt angekoppelt und an einer von der Führung des zu messenden Objekts unabhängigen Hilfsführung verschiebbar ist. Zur Vermeidung von Meßfehlern infolge von Verbiegungen des Teilungsträgers in seiner Gebrauchslage am anderen zu messenden Objekt ist die Abtasteinheit an dem einen Objekt in Höhe der neutralen Ebene des Teilungsträgers mittels Kupplungselemente gelenkig angekoppelt. Eine derartige gelenkige Ankopplung der Abtasteinheit in der neutralen Ebene des Teilungsträgers ist relativ aufwendig und aus Platzgründen nicht in allen Meßeinrichtungen einsetzbar.

Um derartige infolge von Verbiegungen des Teilungsträgers auftretende Meßfehler zu vermeiden, sind Teilungsträger mit einem U-förmigen Querschnitt oder mit einem H-förmigen Querschnitt vorgeschlagen worden, bei denen die neutrale Ebene die Teilungsebene mit der Teilung bildet.

Eine solche Anordnung der Teilungsebene mit der Teilung in der neutralen Ebene des Teilungsträgers ergibt aber dennoch Meßfehler infolge von Verbiegungen des Teilungsträgers bei Meßeinrichtungen, bei denen die Teilung des Teilungsträgers von der Abtasteinheit im Auflichtverfahren mit größerem Abtastabstand abgetastet wird und bei der also die Teilungsebene mit der Teilung des Teilungsträgers eine Reflexionsebene bildet. Die in der Abtasteinheit von einer Lichtquelle ausgehenden und mittels eines Kondensors parallel gerichteten Lichtstrahlen durchsetzen die Abtastteilung auf der Abtastteilungsebene, fallen auf die Teilungsebene mit der Teilung des Teilungsträgers und werden von dieser Teilungsebene als Reflexionsebene wieder auf die Abtastteilungsebene mit der Abtastteilung reflektiert. Die Teilungsebene des Teilungsträgers wirkt somit wie ein optisches Element, das die Abtastteilung wieder auf die Abtastteilungsebene abbildet. Durch die gegenläufige Bewegung der Teilung des Teilungsträgers und des Bildes der Abtastteilung auf der Teilungsebene des Teilungsträgers bei der Meßbewegung werden in bekannter Weise die Lichtstrahlen moduliert und von einem Photoelement in ein elektrisches periodischen Abtastsignal umgewandelt, das einer Auswerteeinheit zur Erzeugung von Meßwerten für die Relativlagen der beiden Objekte zugeführt wird.

Die Teilungsebene des Teilungsträgers und die Abtastteilungsebene der Abtasteinheit sind einander in einem bestimmten parallelen Abstand a zugewandt. Bei einer Verbiegung des Teilungsträgers ergibt sich an einer beliebigen Stelle der Teilungsebene eine Neigung um einen Winkel $\alpha$, die eine Verlagerung des Bildes der Abtastteilung um eine Strecke $2 \alpha a$ auf der Abtastteilungsebene in einer Richtung bewirkt. Verschiebt man den Teilungsträger mit der Teilung in die entgegengesetzte Richtung um die Strecke $\alpha a$, so wird diese Verlagerung des Bildes der Abtastteilung um diese Strecke $2 \alpha a$ auf der Abtastteilungsebene wieder aufgehoben; diese Neigung um den Winkel bewirkt also einen Meßfehler $\alpha a$.

Der Erfindung liegt die Aufgabe zugrunde, bei einer Längen- oder Winkelmeßeinrichtung, bei der eine Teilung in einer Teilungsebene eines Teilungsträgers außerhalb der neutralen Ebene des Teilungsträgers liegt, durch Verbiegungen des Teilungsträgers bewirkte Meßfehler vollständig zu eliminieren.

Diese Aufgabe wird erfindungsgemäß durch den Anspruch 1 gelöst.

Die mit der Erfindung erzielten Vorteile bestehen insbesondere darin, daß durch die vorgeschlagene Anordnung der Abtastteilungsebene mit der Abtastteilung in der neutralen Ebene des Teilungsträgers durch Verbiegungen des Teilungsträgers in seiner Gebrauchslage am zu messenden Objekt bewirkte Meßfehler auf einfache Weise ohne zusätzliche Elemente vollständig beseitigt werden, so daß sich eine einfach aufgebaute und preisgünstige Meßeinrichtung hoher Meßgenauigkeit ergibt. Durch diese hohe Meßgenauigkeit werden beispielsweise bei Bearbeitungsmaschinen, an denen derartige Meßeinrichtungen zum Einsatz kommen, Fehlzeiten und Ausschuß erheblich verringert und die Betriebssicherheit der Bearbeitungsmaschine wesentlich erhöht.

Vorteilhafte Ausbildungen der Erfindung entnimmt man den abhängigen Ansprüchen.

Ausführungsbeispiele der Erfindung werden anhand der Zeichnung näher erläutert.

Es zeigen

Figur 1 schematisch eine lichtelektrische inkrementale Längenmeßeinrichtung in einer Seitenansicht,

Figur 2 einen Teilungsträger und eine Abtasteinheit der Längenmeßeinrichtung in vergrößerter Darstellung im Querschnitt,

Figur 3 optische Strahlenverläufe bei parallelen und nichtparallelen Teilungen in schematischer Darstellung,

Figur 4 einen Teilungsträger in verbogenem Zustand in vergrößerter Darstellung,

Figur 5 eine erste Anordnung einer Abtasteinheit zu einem Teilungsträger und

Figur 6 eine zweite Anordnung einer Abtasteinheit zu einem Teilungsträger.

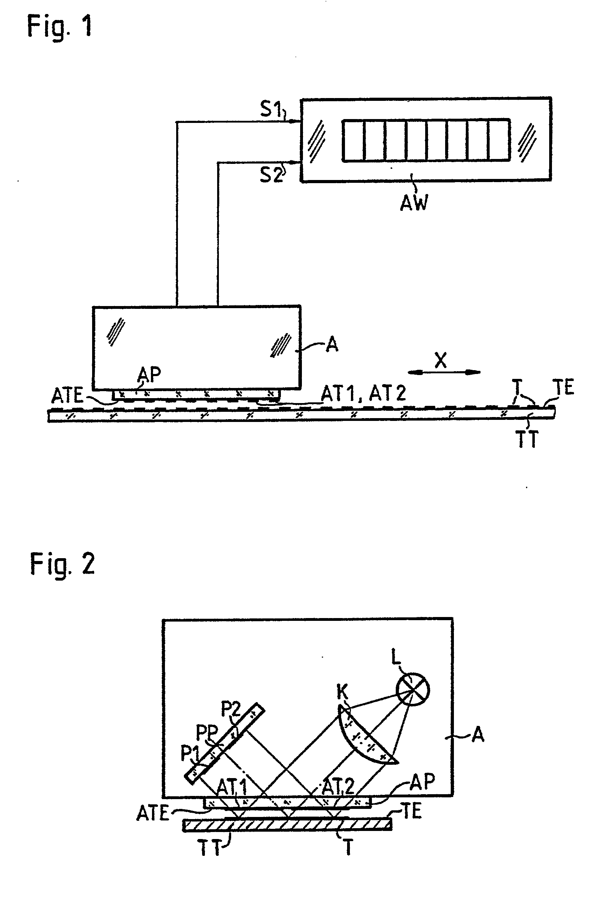

In Figur 1 ist schematisch eine lichtelektrische inkrementale Längenmeßeinrichtung in einer Seitenansicht dargestellt, bei der eine Teilung T in einer Teilungsebene TE eines Teilungsträgers TT von einer Abtasteinheit A berührungsfrei abgetastet wird. Der Teilungsträger TT und die Abtasteinheit A sind in nicht gezeigter Weise jeweils mit zwei verschiebbaren Objekten, beispielsweise mit einem Schlitten und mit dem Bett einer Bearbeitungsmaschine, verbunden, deren gegenseitige Relativlage gemessen werden soll.

In Figur 2 sind der Teilungsträger TT und die Abtasteinheit A der Längenmeßeinrichtung in vergrößerter Darstellung im Querschnitt dargestellt. In der Abtasteinheit A werden die von einer Lichtquelle L ausgehenden Lichtstrahlen durch einen Kondensor K parallel gerichtet, durchsetzen eine Abtastteilungsebene ATE mit zwei Abtastteilungen AT1, AT2 einer Abtastplatte AP und werden von der Teilungsebene TE mit der Teilung T des Teilungsträgers TT durch die beiden Abtastteilungen AT1, AT2 der Abtastplatte AP auf zwei Photoelemente P1, P2 einer Photoelementenplatte PP reflektiert. Die beiden Abtastteilungen AT1, AT2 der Abtastplatte AP stimmen mit der Teilung T des Teilungsträgers TT überein, sind jedoch um ein Viertel ihrer Teilungsperiode gegeneinander versetzt. Die beiden Photoelemente P1, P2 der Photoelementenplatte PP, die den beiden Abtastteilungen AT1, AT2 jeweils zugeordnet sind, liefern bei der Meßbewegung durch die Modulation der Lichtstrahlen durch die Teilung T und die beiden Abtastteilungen AT1, AT2 zwei periodische Abtastsignale S1, S2 mit einem gegenseitigen Phasenversatz von 90°, die gemäß Figur 1 einer Auswerteeinheit AW mit Impulsformerstufen, einem Zähler mit einem Richtungsdiskriminator sowie einer Anzeigeeinheit zur digitalen Anzeige der Meßwerte für die gegenseitige Relativlage der beiden verschiebbaren Objekte zugeführt werden.

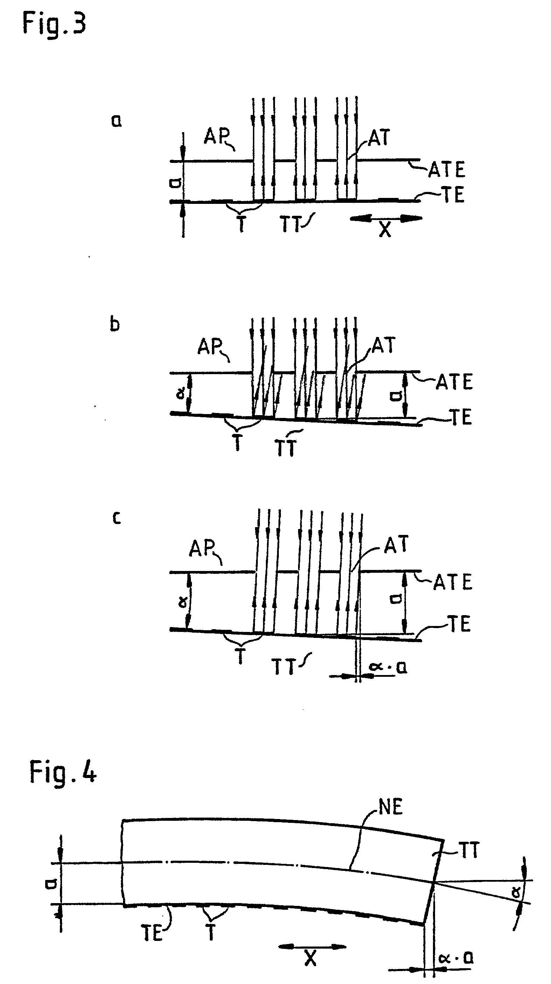

In Figur 3a sind schematisch die Abtastteilung AT in der Abtastteilungsebene ATE der Abtastplatte AP und die Teilung T in der Teilungsebene TE des Teilungsträgers TT in einer Seitenansicht dargestellt, die einander in einem bestimmten parallelen Abstand a zugewandt sind. Die in der Abtasteinheit A von der Lichtquelle L ausgehenden und mittels des Kondensors K parallel gerichteten Lichtstrahlen durchsetzen die Abtastteilung AT auf der Abtastteilungsebene ATE der Abtastplatte AP, fallen auf die Teilungsebene TE mit der Teilung T des Teilungsträgers TT und werden von dieser Teilungsebene TE als Reflexionsebene wieder auf die Abtastteilungsebene ATE mit der Abtastteilung AT reflektiert. In Figur 3a ist die Position der Teilung T des Teilungsträgers TT bezüglich der Abtastteilung AT der Abtastplatte AP dargestellt, in der die maximale Amplitude des periodischen Abtastsignals S1, S2 erzeugt wird. Bei einer Verbiegung des Teilungsträgers TT in seiner Gebrauchslage am zu messenden Objekt ergibt sich gemäß Figur 3b an einer beliebigen Stelle der Teilungsebene TE eine Neigung um einen Winkel $\alpha$, die eine Verlagerung des Bildes der Abtastteilung AT um eine Strecke 2 $\alpha$ a auf der Abtastteilungsebene ATE in positiver Meßrichtung +X bewirkt, so daß ein periodisches Abtastsignal S1, S2 mit merklich verringerter Amplitude erzeugt wird. Verschiebt man den Teilungsträger TT mit der Teilung T in negativer Meßrichtung -X um die Strecke $\alpha$ a gemäß Figur 3c, so erhält man wieder die Position der Teilung T des Teilungsträgers TT bezüglich der Abtastteilung AT der Abtastplatte AP mit der maximalen Amplitude des Antastsignals S1, S2. Es wird also diese Verlagerung des Bildes der Abtastteilung AT um diese Strecke 2 $\alpha$ a auf der Abtastteilungsebene ATE wieder aufgehoben; diese Neigung um den Winkel $\alpha$ a bewirkt einen Meßfehler.

Figur 4 zeigt den Teilungsträger TT in vergößerter Darstellung, bei dem die neutrale Ebene NE von der Teilungsebene TE mit der Teilung T den gleichen Abstand a aufweist. Bei einer Verbiegung des Teilungsträgers TT in seiner Gebrauchslage am zu messenden Objekt ergibt sich an einer beliebigen Stelle der Teilungsebene TE eine Neigung um den gleichen Winkel $\alpha$, die eine Verlagerung des Bildes der Abtastteilung AT gemäß Figur 3 um eine Strecke 2 $\alpha$ a auf der neutralen Ebene NE des Teilungsträgers TT in positiver Meßrichtung +X bewirkt, so daß - wie oben bereits erläutert - ein Meßfehler $\alpha$ a bewirkt wird. Da jedoch bei der Verbiegung des Teilungsträgers TT die Teilungsebene TE mit der Teilung T durch Stauchung eine Verschiebung in negativer Meßrichtung -X um die Strecke $\alpha$ a erfährt, wird der Meßfehler $\alpha$ a wieder aufgehoben.

Erfindungsgemäß wird daher vorgeschlagen, daß die Abtastteilungsebene ATE mit der Abtastteilung AT der Abtasteinheit A in der neutralen Ebene NE des Teilungsträgers TT angeordnet ist.

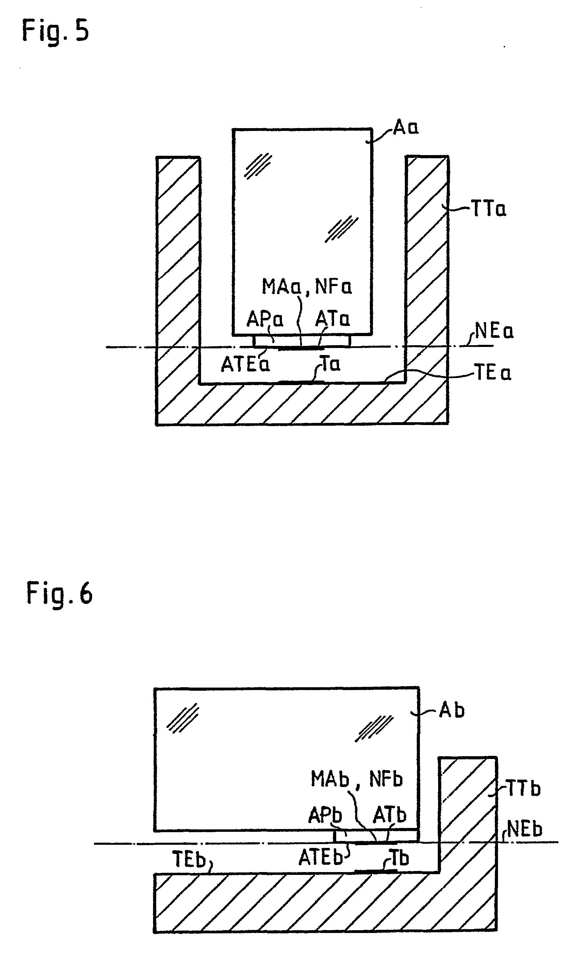

In Figur 5 ist der Teilungsträger TTa mit einem U-förmigen Querschnitt gezeigt, dessen Teilungsebene TEa mit der Teilung Ta außerhalb seiner neutralen Ebene NEa liegt. Die Abtastteilungsebene ATEa mit der Abtastteilung ATa der Abtastplatte APa der Abtasteinheit Aa liegt dagegen in der neutralen Ebene NEa des Teilungsträgers TTa, so daß durch Verbiegungen des Teilungsträgers TTa in seiner Gebrauchslage am zu messenden Objekt bedingte Meßfehler eliminiert werden.

In Figur 6 ist der Teilungsträger TTb mit einem L-förmigen Querschnitt dargestellt, dessen Teilungsebene TEb mit der Teilung Tb außerhalb seiner neutralen Ebene NEb liegt. Die Abtastteilungsebene ATEb mit der Abtastteilung ATb der Abtastplatte APb der Abtasteinheit Ab liegt dagegen in der neutralen Ebene NEb des Teilungsträgers TTb, so daß durch Verbiegungen des Teilungsträgers TTb in seiner Gebrauchslage am zu messenden Objekt bedingte Meßfehler eliminiert werden.

In bevorzugter Ausführung liegen die Mittelachsen MAa, MAb der Abtastteilungen ATa, ATb in den neutralen Fasern NFa, NFb der neutralen Ebenen NEa, NEb der Teilungsträger TTA, TTb; die neutralen Fasern NFa, NFb verlaufen in Meßrichtung X und bilden die Symmetrieachsen der neutralen Ebenen NEa, NEb.

Die Erfindung ist sowohl bei inkrementalen als auch bei absoluten Längen- oder Winkelmeßeinrichtungen mit Erfolg einsetzbar.

## Patentansprüche

1. Längen- oder Winkelmeßeinrichtung zur Messung der Relativlage zweier Objekte, bei der eine Teilung in einer Teilungsebene eines mit dem einen Objekt verbundenen Teilungsträger außerhalb der neutralen Ebene des Teilungsträgers liegt und mittels einer Abtastteilung in einer Abtastteilungsebene einer mit dem anderen Objekt verbundenen Abtasteinheit abgetastet wird, dadurch gekennzeichnet, daß die Abtastteilungsebene (ATEa; ATEb) mit der Abtastteilung (ATa; ATb) der Abtasteinheit (Aa; Ab) in der neutralen Ebene (NEa; NEb) des Teilungsträgers (TTa; TTb) angeordnet ist.

2. Meßeinrichtung nach Anspruch 1, dadurch gekennzeichnet, daß die Mittelachse (MAa; MAb) der Abtastteilung (ATa; ATb) in der neutralen Faser (NFa; NFb) der neutralen Ebene (NEa; NEb) des Teilungsträgers (TTa; TTb) angeordnet ist.

3. Meßeinrichtung nach Anspruch 1, dadurch gekennzeichnet, daß der Teilungsträger (TTa) einen U-förmigen Querschnitt besitzt.

4. Meßeinrichtung nach Anspruch 1, dadurch gekennzeichnet, daß der Teilungsträger (TTb) einen L-förmigen Querschnitt aufweist.

## Claims

1. A length or angle measuring apparatus for measuring the relative position of two objects, wherein a scale in a scale plane of a scale carrier connected to the one object is disposed outside the neutral plane of the scale carrier and is scanned by means of a scanning scale in a scanning scale plane of a scanning unit connected to the other object characterized in that the scanning scale plane (ATEa; ATEb) is arranged with the scanning scale (ATa; ATb) of the scanning unit (Aa; Ab) in the neutral plane (NEa; NEb) of the scale carrier (TTa; TTb).

2. A measuring apparatus according to claim 1 characterized in that the centre line (MAa; MAb) of the scanning scale (ATa; ATb) is arranged in the neutral fibre (NFa; NFb) of the neutral plane (NEa; NEb) of the scale carrier (TTa; TTb).

3. A measuring apparatus according to claim 1 characterized in that the scale carrier (TTa) is of U-shaped cross-section.

4. A measuring apparatus according to claim 1 characterized in that the scale carrier (TTb) is of L-shaped cross-section.

## Revendications

1. Dispositif de mesure de longeur ou d'angle pour mesurer la position relative de deux objets, dans lequel une graduation se trouve dans un plan de graduation d'un support de graduation relié à l'un des objets, en dehors du plan neutre du support de graduation, et est balayée au moyen d'une graduation de balayage dans un plan de graduation de balayage d'une unité de balayage reliée à l'autre objet, caractérisé par le fait que le plan de graduation de balayage (ATEa; ATEb) avec la graduation de balayage (ATan; ATb) de l'unité de balayage (Aa; Ab) est disposé dans le plan neutre (NEa; NEb) du support de graduation (TTa; TTb).

2. Dispositif de mesure selon la revendication 1, caractérisé par le fait que l'axe médian (MAa; MAb) de la graduation de balayage (ATa; Atb) est disposé dans la fibre neutre (NFa; NFb) du plan neutre (NEa; NEb) du support de graduation (TTa; TTb).

3. Dispositif de mesure selon la revendication 1, carctérisé par le fait que le support de graduation (TTa) présente une section en forme de U.

4. Dispositif de mesure selon la revendication 1, caractérisé par le fait que le support de graduation (TTb) présente une section en forme de L.

Fig. 1

Fig. 2

# Fig.3

a

AP
AT
ATE
TE
a
T TT
X

b

AP
AT
ATE
α a
TE
T TT

c

AP
AT
ATE
α a
TE
T TT
α·a

# Fig.4

NE
TT
a
TE T
X
α
α·a

## Fig. 5

## Fig. 6